# EUROPÄISCHE PATENTSCHRIFT

(11) **EP 1 046 533 B1**
(45) Veröffentlichungstag und Bekanntmachung des Hinweises auf die Patenterteilung: **20.08.2003**
(21) Anmeldenummer: 00201362.1
(22) Anmeldetag: 14.04.2000
(51) Int. Cl.: B60J 7/12

(54) **Hydraulische Bedienungseinrichtung für eine Verdeckeinheit eines Fahrzeugs**
Hydraulic control system for a soft top unit of a vehicle
Système de contrôle hydraulique pour capote flexible de véhicule

(30) Priorität: 21.04.1999 NL 1011852
(43) Veröffentlichungstag der Anmeldung: 25.10.2000
(60) Teilanmeldung: 03076423.7
(73) Patentinhaber: Actuant Corporation, Glendale, Wisconsin 53209-3703 (US)
(72) Erfinder: Mentink, Laurentius Andreas Gerardus, 7483 AC Haaksbergen (NL)
(74) Vertreter: Brookhuis, Hendrik Jan Arnold

(56) Entgegenhaltungen:
- EP-A- 0 693 390
- EP-A- 0 842 803
- DE-A- 19 730 685

## Beschreibung

Die vorliegende Erfindung bezieht sich auf eine hydraulische Bedienungseinrichtung für eine Verdeckeinheit eines Fahrzeugs, gemäß dem in EP0693390A1 offenbarten merkmalen des oberbegriffs des Anspruchs 1.

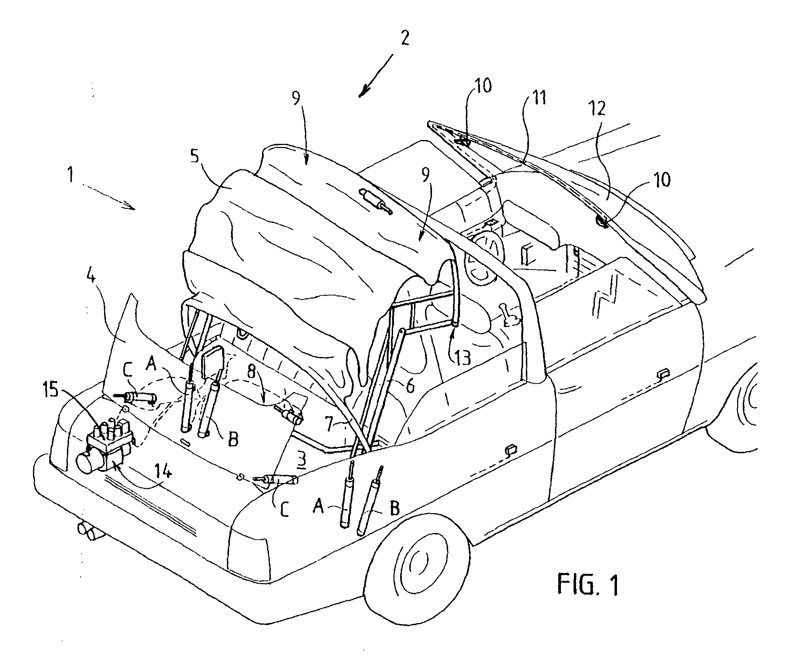

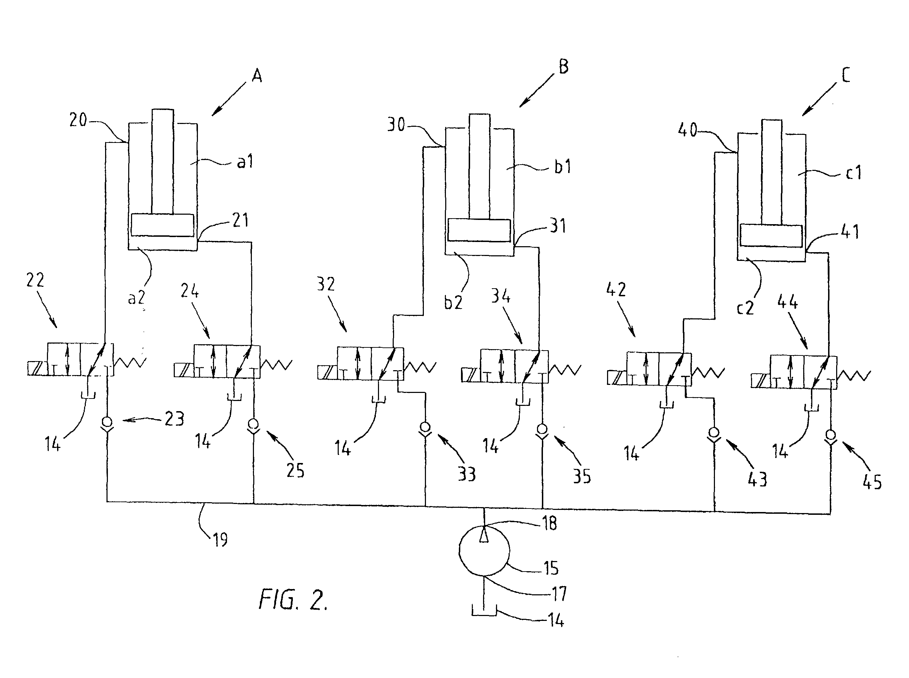

In Figur 1 der vorliegenden Anmeldung ist ein Fahrzeug mit einer allgemein bekannten Ausführung einer hydraulisch betätigbaren Verdeckeinheit gezeigt. In Figur 2 ist in der Form eines hydraulischen Schemas eine allgemein bekannte Ausführung einer hydraulischen Bedienungseinrichtung gezeigt, die dazu geeignet ist, die Verdeckeinheit zu betätigen.

Der Nachteil der in Figur 2 gezeigten Bedienungseinrichtung ist die Vielzahl von elektrisch betätigbaren Zweipositionenventilen, nämlich zwei Ventile pro anzusteuerndes Aktuatorpaar. Derartige Ventile sind kostspielige Teile und deshalb ist es bekannt, eine Reduzierung der Anzahl Ventile anzustreben. Weiter hat die Anzahl Ventile Einfluß auf die elektrischen Steuermittel für die Ventile. So sind unerwünscht viele elektrische Kabel zu den Ventilen notwendig.

Es ist bei hydraulischen Bedienungseinrichtungen für Verdeckeinheiten bekannt, eine "Haltefunktion" vorzusehen, das heißt, die Möglichkeit zu schaffen, den Bewegungsablauf der Verdeckeinheit an jedem beliebigen Moment (zeitweilig) einzustellen, wobei dann die Aktuatore dadurch hydraulisch in ihrem Stand gehalten werden, daß keine hydraulische Flüssigkeit aus den Aktuatoren ausströmen kann.

Zugleich ist allgemein bekannt, eine "Notbedienungsfunktion" vorzusehen, das heißt, die Möglichkeit, bei einer Störung die Verdeckeinheit manuell, wenn möglich sowohl in den geöffneten, als auch in den geschlossenen Stand, zu bewegen. Insbesondere ist die Notbedienungsfunktion bei einer elektrischen Störung relevant, wodurch die elektrisch angetriebene Pumpe und/oder elektrisch betätigten Ventile nicht mehr funktionieren.

Die in der Figur 2 gezeigte hydraulische Bedienungseinrichtung schafft sowohl die erwähnte "Haltefunktion", nämlich wenn alle Ventile elektrisch betätigt bleiben, als auch die "Notbedienungsfunktion", nämlich wenn alle Ventile nicht länger betätigt sind, aber kennt, wie gesagt, den Nachteil einer unerwünscht großen Anzahl kostbarer elektrisch betätigbarer Ventile.

Um die Anzahl Ventile zu reduzieren, ist eine bekannte Maßnahme, die kolbenseitige Arbeitskammer von allen Aktuatoren mit einander und mit einem einzelnen Ventil zu verbinden. Eine solche Ausführung ist bekannt aus EP 0693390 A1.
In dieser Bedienungseinrichtung werden die Aktuatoren nicht regenerativ betrieben und die Anzahl Ventile ist niedrig.

Um die Anzahl Ventile zu reduzieren, ist eine andere bekannte Maßnahme, einen oder mehrere der Aktuatore "regenerativ" zu betreiben, was auch als ein "differentielles" Betreiben bekannt ist. Bei dem normalen Betreiben eines doppeltwirkenden Aktuators wird die eine Arbeitskammer mit dem Ausströmanschluß der Pumpe und die andere Arbeitskammer mit dem Behälter verbunden. Bei dem regenerativen Betreiben eines doppeltwirkenden hydraulischen Aktuators werden in eine Verlagerungsrichtung der Kolbenstange beide Arbeitskammern mit dem Ausströmanschluß der Pumpe verbunden. Auf Basis des Unterschieds in der wirksamen Oberfläche des Kolbens an der Seite der Kolbenstange und der anderen Seite des Kolbens, wird die Kolbenstange dann ausgeschoben. In dieser Situation kann die Kolbenstange auch ausgeschoben gehalten werden. Zum Wiedereinschieben wird die kolbenstangenseitige Arbeitskammer mit dem Ausströmanschluß, und die andere Arbeitskammer mit dem Behälter verbunden. Diese Lösung ermöglicht es, gegenüber dem Schema der Figur 2 bei jedem Aktuator ein betätigbares Zweipositionenventil einzusparen, indem die kolbenstangenseitige Arbeitskammer direkt mit dem Ausströmanschluß der Pumpe, ohne Intervention eines betätigbaren Ventils verbunden wird. Diese Lösung hat aber wohl zur Folge, daß die Kraft, die der Aktuator beim Ausschieben der Kolbenstange liefern kann, geringer als bei der Lösung gemäß Figur 2 ist. Aus diesem Grund is die Lösung insbesondere für die Teile der Klappverdeckeinheit geeignet, die nur eine begrenzte Antriebskraft erfordern. Insbesondere betrifft dies die etwaigen hydraulisch betätigten Verriegelungen, den Deckel zum Abschließen eines Unterbringungsraums des Fahrzeugs, in dem das geöffnete Klappverdeck untergebracht wird (bekannt als Tonneau-Cover), und den Hinter- oder Stoffspannbügel eines aus einem Stoff hergestellten Verdecks.

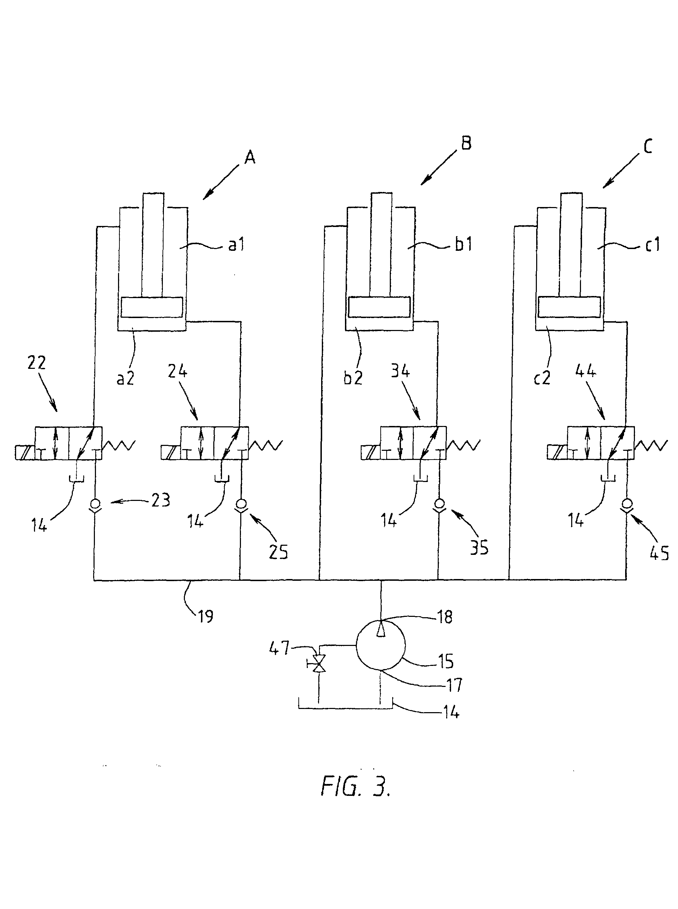

In Figur 3 ist in der Form eines hydraulischen Schemas ein Ausführungsbeispiel einer hydraulischen Bedienungseinrichtung für eine Klappverdeckeinheit eines Fahrzeugs gezeigt, in der die mit einer geringen Kraft beweglichen Teile von regenerativ betriebener hydraulischen Aktuatoren angetrieben werden. Ein wichtiger Nachteil dieser Lösung ist aber das nunmehr notwendige, von dem Fahrer zu aktivierende, in diesem Beispiel manuell zu betätigende, Notbedienungsventil. Dieses Notbedienungsventil ist hier notwendig, weil aus den kolbenstangenseitigen Arbeitskammern des Stoffspannbügelaktuators und des Deckelaktuators beim Ausfallen einer elektrischen Erregung der elektrisch betätigbaren Zweipositionenventile keine Flüssigkeit zu dem Behälter abfließen kann. Insbesondere ist keine Strömung durch die Pumpe von dem Ausströmanschluß zu dem Sauganschluß möglich. Es zeigt sich, daß es schwierig oder unmöglich ist, das manuell zu betätigende Notbedienungsventil an einer leicht zu erreichenden Stelle in dem Fahrzeug anzuordnen. Aus diesem Grund und weil verschiedene Fahrzeughersteller nicht möchten, daß der Fahrer in einer Störungssituation eine Handlung ausführen muß, um die Notbedienungsmöglichkeit zu schaffen, und schon gar nicht, daß der Fahrer manuell ein Ventil betätigen muß, ist es bekannt, der Überflüssigkeit eines derartigen Notbedienungsventil anzustreben, und die Notbedienungseinrichtung in solcher Weise auszuführen, daß die Notbedienungsmöglichkeit automatisch, also ohne Eingreifen des Fahrers, geschaffen wird.

Weiter is bereits bekannt, das Notbedienungsventil als ein normal geöffnetes elektrisch betätigbares Ventil auszuführen in einer Verbindung zwischen der/den Arbeitskammer(n) des Aktuators, bzw. der Aktuatore und dem Behälter, die während des Betreibens der Verdeckeinheit elektrisch betätigt und also geschlossen wird. Ein derartiges Ventil ist jedoch kostspielig und erfordert eine zusätzliche elektronische Ansteuerung.

Der vorliegenden Erfindung liegt die Aufgabe zugrunde, Maßnahmen vorzuschlagen, die es dem Fachmann ermöglichen, eine hydraulische Bedienungseinrichtung für eine Verdeckeinheit eines Fahrzeugs mit einer relativ geringen Anzahl kostspieliger Ventile zu entwickeln. Zugleich ist es Aufgabe der Erfindung, die Möglichkeit zu schaffen, in Verbindung mit der geringen Anzahl kostspieliger Ventile die Notbedienungsfunktion in automatischer Weise zu realisieren. Weiter wird bezweckt, die Haltefunktion in einer ansprechenden Weise in die Bedienungseinrichtung zu integrieren.

Die Erfindung schafft hierzu eine hydraulische Bedienungseinrichtung für eine Verdeckeinheit eines Fahrzeugs gemäß Anspruch 1. Der Fachmann kann bestimmen, während welchem Zeitraum, bzw. Zeiträumen des Bewegungsablaufs der hydraulischen Bedienungseinrichtung es erforderlich ist, daß in der mit dem ODER-Ventil verbundenen Arbeitskammer des ersten Aktuators ein hydraulischer Druck herrscht. Daraufhin kann festgestellt werden, mit welchen Ausgangsanschlüssen der betätigbaren Zweipositionenventile der Einrichtung diese Arbeitskammer des ersten Aktuators verbunden sein sollte (über das ODER-Ventil), um in dem vorgesehenen Zeitraum, bzw. Zeiträumen den gewünschten hydraulischen Druck in dieser Arbeitskammer zu schaffen. Wenn es sich herausstellt, daß es notwendig ist, mehr als zwei Ausgangsanschlüsse unterschiedlicher betätigbarer Ventile an diese Arbeitskammer anzuschließen, zum Beispiel an drei betätigbare Ventile, so ist es im Rahmen der Erfindung denkbar, daß das ODER-Ventil mit seinem ersten Einganganschluß mit dem Ausgangsanschluß eines betätigbaren Zweipositionenventil verbunden ist und mit dem zweiten Eingangsanschluß mit dem Ausgangsanschluß eines folgenden ODER-Ventils verbunden ist, dessen Eingangsanschlüsse mit wiederum anderen betätigbaren Ventilen verbunden sind. Der erste Aktuator kann bei der Maßnahme gemäß Anspruch 1 nach Ansicht des Fachmanns normal oder regenerativ betrieben werden.

Ein Vorteil der erfindungsgemäßen Maßnahme ist, daß ein ODER-Ventil als unbetätigtes Ventil in technisch einfacher Weise und deshalb kostengünstig realisiert werden kann. Weiter ist keine Ansteuerung notwendig, wodurch die elektrischen Steuermittel einfach sein können. Auch sind ODER-Ventile sehr zuverlässig.

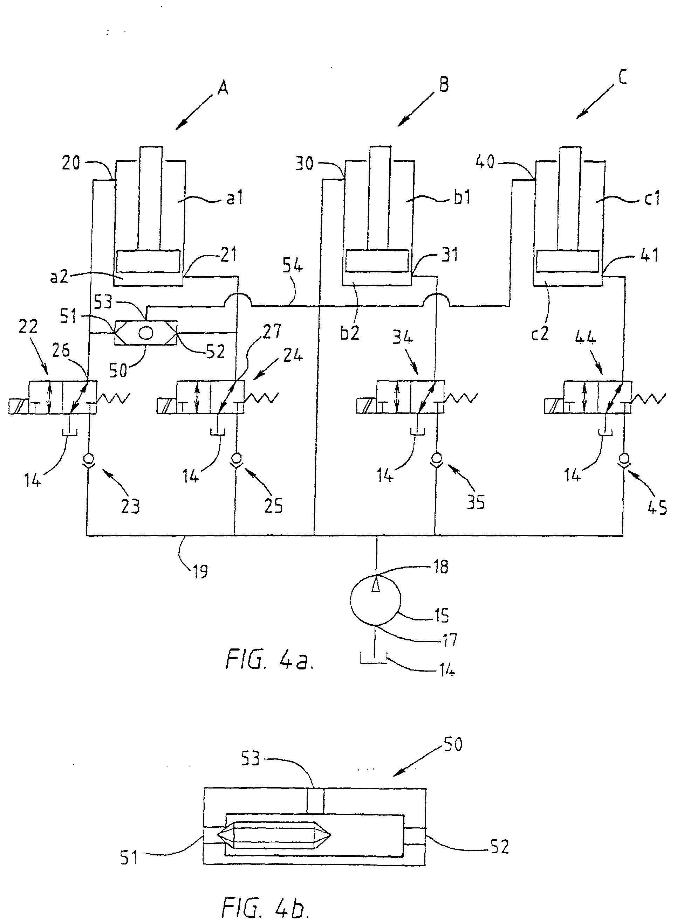

Vorzugsweise ist vorgesehen, daß das angewendete ODER-Ventil oder die ODER-Ventile in solcher Weise ausgeführt sind, daß eine Flüssigkeitsströmung vom Ausgangsanschlusses zu einem oder beiden Eingangsanschlüssen des ODER-Ventils möglich ist. Dies ist zum Beispiel mit der in Figur 4b dargestellten Ausführung möglich. Wie bekannt kann ein ODER-Ventil auch mit zwei gegenüber einander angeordneten Rückschlagventilen realisiert werden, wobei der Ausgangsanschluß dann zwischen beiden Rückschlagventilen anschließt. Diese letztgenannte Ausführung gestattet keine Strömung vom Ausgangsanschluß des ODER-Ventils zu einem Eingangsanschluß. Der Vorteil der Maßnahme gemäß Anspruch 2 besteht darin, daß jetzt die Möglichkeit geschaffen wird, daß über das ODER-Ventil hydraulische Flüssigkeit aus der ersten Arbeitskammer des ersten Aktuators ausströmen kann.

Vorzugsweise ist, wie in Anspruch 3 beschrieben, weiter vorgesehen, daß die mit dem ODER-Ventil verbundenen betätigbaren Zweipositionenventile in unbetätigtem Zustand den ersten Stand einnehmen, zum Beispiel versehen sind mit einer Federrückstellung zu dem ersten Stand. Durch die Kombination der Maßnahmen gemäß Ansprüchen 2 und 3 wird eine automatische Notbedienungsmöglichkeit des ersten Aktuators dadurch erreicht, daß beim Ausfall der Betätigung der betätigbaren Ventile, über das ODER-Ventil und die betätigbaren Ventile eine Verbindung von der ersten Arbeitskammer des ersten Aktuators mit dem Behälter geschaffen wird, so daß beim manuellen Verlagern der Verdeckeinheit über das ODER-Ventil hydraulische Flüssigkeit aus der ersten Arbeitskammer ausströmen kann, oder gerade angesaugt werden kann.

Der Erfindungsgedanke und vorteilhafte Ausbildungen der erfindungsgemäßen hydraulischen Bedienungseinrichtungen sind in den Ansprüchen und der nachfolgenden Beschreibung anhand der Zeichnung beispielhaft beschrieben. Es zeigt:
- Fig. 1: eine perspektivische Ansicht eines Fahrzeugs des Kabriolettyps, bei dem das Klappverdeck teilweise geöffnet ist, und bei dem die hydraulischen Aktuatore der Bedienungseinrichtung schematisch angedeutet sind,
- Fig. 2: ein hydraulisches Schema einer allgemein bekannten Ausbildung einer hydraulischen Bedienungseinrichtung für eine Verdeckeinheit,
- Fig. 3: ein hydraulisches Schema einer anderen Ausbildung einer hydraulischen Bedienungseinrichtung für eine Verdeckeinheit,
- Fig. 4a: ein hydraulisches Schema einer bevorzugten Ausführungsform einer hydraulischen Bedienungseinrichtung für eine erfindungsgemäße Verdeckeinheit,
- Fig. 4b: ein Beispiel eines ODER-Ventils,
- Fig. 4c: das hydraulische Schema einer Variante der Figur 4a,
- Fig. 5: ein hydraulisches Schema einer vereinfachten Version der Ausbildung der Figur 4, und
- Fig. 6: ein hydraulisches Schema einer Variante der Figur 5,

Figur 1 zeigt ein Fahrzeug des Kabriolettyps mit in diesem eine Karosserie und Passagiersteil 2. Das Fahrzeug 1 weist eine Verdeckeinheit auf, die aus einem Klappverdeck zum Überdecken des Passagiersteils 2 und einer hydraulischen Bedienungseinrichtung zum Bewegen des Klappverdecks zwischen einem geschlossenen Stand, in dem das Klappverdeck das Passagiersteil 2 des Fahrzeugs 1 überdeckt, und einem geöffneten Stand, in dem das Passagiersteil 2 nicht überdeckt is.

Hinter dem Passagiersteil 2 hat die Karosserie des Fahrzeugs 1 einen Unterbringungsraum 3, in dem das Klappverdeck in dem geöffneten Stand untergebracht werden kann und weiter einen hinauf- und herunterschwenkbaren Deckel 4 zum Abschließen des Unterbringungsraums 3.

Das Klappverdeck hat einen faltbaren Bezug 5 und einen zusammenlegbaren Rahmen für den Bezug 5. Der Rahmen umfaßt unter anderem einen Hauptbügel 6, der durch die Bedienungseinrichtung zwischen einem hinaufgeschwenkten und einen heruntergeschwenkten Stand beweglich ist, und einen schwenkbaren Hinterbügel 7 zum Bewegen des hinteren Teils des Bezuges 5 des Klappverdecks. Der Hinterbügel 7 ist durch die Bedienungseinrichtung zwischen einem hinafgeschwenkten Stand, in dem der Hinterbügel 7 mehr oder weniger neben dem hinaufgeschwenkten Hauptbügel 6 liegt, wie ersichtlich in Figur 1, und einem heruntergeschwenkten Stand, beweglich.

Zum Verriegeln des Deckels 4 in den den Unterbringungsraum 3 abschließenden Stand ist bei 8 eine mechanische Deckelverriegelung (nicht dargestellt) vorgesehen.

Um das Klappverdeck in dem geschlossenen Stand zu verriegeln, sind an der vorderen Klappverdeckkante zwei Verriegelungen bei 9 vorgesehen, die mit Rastaussparungen 10 im Rahmen 11 über der Windschutzscheibe 12 des Fahrzeugs 1 zusammenwirken können.

Das dargestellte Klappverdeck ist eines bekannten Typs, dessen an die vordere Klappverdeckkante grenzende Teil des Klappverdecks um Scheitellinie 13 gegenüber dem dahinter liegenden Teil des Klappverdecks hinaufschwenken kann. Diese Schwenkung des vorderen Teils wird von einer mechanischen Kupplung zwischen diesem vorderen Teil und dem von dem Hinterbügel 7 bewegten hinteren Teil des Klappverdecks bewirkt.

Die hydraulische Bedienungseinrichtung umfaßt mehrere hydraulische Aktuatore, worunter ein Paar Hauptbügelaktuatore A zum Schwenken des Hauptbügels 6, ein Paar Hinterbügelaktuatore B zum Schwenken des Hinterbügels 7 und ein Paar Deckelaktuatore C zum Bewegen des Deckels 4 vorgesehen sind.

Die Hauptbügelaktuatore A, die Hinterbügelaktuatore B und die Deckelaktuatore C sind lineare kolben-Zylinder-Einrichtungen des doppeltwirkenden Typs mit je einer ersten Arbeitskammer und einer zweiten Arbeitskammer, die durch einen Kolben des betreffenden Aktuators voneinander getrennt sind, beziehungsweise mit a1,a2, b1,b2, c1,c2 angegeben. Die Aktuatore eines jeden Paares sind in bekannter Weise parallel angeschlossen, so daß der Einfachkeit halber in der Beschreibung fortan jeweils nur ein einziger Aktuator eines jeden Paares angedeutet ist.

Die hydraulische Bedienungseinrichtung umfaßt weiter einen Behälter 14 für hydraulische Flüssigkeit und eine Pumpe 15.

In Figur 2 ist eine bekannte hydraulische Bedienungseinrichtung für eine Klappverdeckeinheit eines Fahrzeugs dargestellt, mit in dieser die bereits in Figur 1 gezeigten Aktuatore A, und zwar ein Paar Hauptaktuatore zum Schwenken des Hauptbügels 6, ein Paar Hinterbügelaktuatore B zum Schwenken des Hinterbügels 7 und ein Paar Deckelaktuatore C zum Bewegen des Deckels 4. Die Aktuatore eines jeden Paares sind in bekannter Weise parallel angeschlossen, so daß der Einfachkeit halber in Figur 2 und in der Beschreibung fortan jeweils nur ein einziger Aktuator eines jeden Paares angedeutet ist.

Die Hauptbügelaktuatore A, die Hinterbügelaktuatore B, und die Deckelaktuatore C sind lineare kolben-Zylinder-Einrichtungen des doppeltwirkenden Typs met je einer ersten Arbeitskammer und einer zweiten Arbeitskammer, die durch einen Kolben des betreffenden Aktuators voneinander getrennt sind, beziehungsweise mit a1,a2, b1,b2, c1,c2 angedeutet.

Die Pumpe 15 weist einen Sauganschluß 17 und einen Ausströmanschluß 18 auf, und hat eine einzige Pumprichtung, das heißt, die Pumpe 15 kann nur Flüssigkeit von dem Sauganschluß 17 zu dem Ausströmanschluß 18 pumpen. Der Sauganschluß 17 ist mit dem Behälter 14 verbunden. Weiter ist die Pumpe 15 einer solchen Ausführung, daß keine Strömung durch die Pumpe 15 von dem Ausströmanschlusses 18 zum Sauganschluß 17 und so zum Behälter 14 möglich ist. Dies kann zum Beispiel eine Radialkolbenpumpe sein. Vorzugsweise wird die Pumpe 15 von einem nicht dargestellten Elektromotor angetrieben.

Der Ausströmanschluß 18 der Pumpe 15 schließt an eine gemeinsame Leitung 19 an, welche Leitung 19 mit jedem der Aktuatore A,B und C verbunden ist.

Der Aktuator A hat einen zu der Kammer a1 gehörenden Anschluß 20 und einen zu der Kammer a2 gehörenden Anschluß 21.

Der Aktuator B hat einen zu der Kammer b1 gehörenden Anschluß 30 und einen zu der Kammer b2 gehörenden Anschluß 31.

In Figur 2 befindet sich zwischen jedem der Anschlüsse eines Aktuators und der Leitung 19 eine Leitung, mit in dieser ab dem Anschluß zu der Leitung 19 ein betätigbares Zweipositionenventil, das in seinem ersten Stand die Arbeitskammer mit dem Behälter 14, und in seinem zweiten Stand mit der Leitung 19 verbindet, und ein in Richtung auf die Leitung 19 abschließendes Rückschlagventil. Das Ventil ist ein elektromagnetisch betätigtes 3/2-Kugelsitzventil mit Federrückstellung zu dem ersten Stand.

Die Wirkung der in Figur 2 gezeigten Einrichtung ist allgemein bekannt und zum Teil bereits im Obenstehenden erläutert. Insbesondere wird bemerkt, daß die Rückschlagventile 23, 25, 33, 35, 43, 45 vorgesehen sind, um die Aktuatore A,B,C, in beide Richtungen ihrer Kolbenstange hydraulisch festhalten zu können, wenn der Bewegungsablauf der Klappverdeckeinheit unterbrochen wird. In diesem Fall werden alle Zweipositionenventile betätigt, während die Pumpe 15 ausgeschaltet wird. Wenn bei einem bestimmten Aktuator die Haltefunktion in eine oder beide Richtungen der Kolbenstange nicht benötigt ist, kann das zugehörige Rückschlagventil entfallen.

In Figur 3 sind die der Figur 2 entsprechenden Teile mit den gleichen Bezugszeichen versehen, und ihre Wirkung wird nachstehend nicht weiter erläutert werden. Ein wichtiger Unterschied mit Figur 2 besteht darin, daß die erste Arbeitskammer b1 des Hinterbügelaktuators B und die erste Arbeitskammer c1 des Deckelaktuators C direkt, über eine feste Leitung ohne Ventile, mit der Leitung 19 und somit mit dem Ausströmanschluß 18 der Pumpe 15 verbunden sind. Hierdurch werden diese Aktuatore B und C regenerativ betrieben. Zum Ausschieben der Kolbenstange dieser Aktuatore B und C wird das zugehörige betätigbare Ventil 34, 44 betätigt, so daß sowohl die erste, als auch die zweite Arbeitskammer b1,b2 und c1,c2 unter hydraulischen Druck kommen. Durch den Unterschied in wirksamer Oberfäche an beiden Seiten des Kolbens dieser Aktuatore B und C wird die Kolbenstange dann ausschieben, und wenn das zugehörige Ventile betätigt bleibt, mit Kraft ausgeschoben gehalten werden. Zum Einschieben der Kolbenstange der Aktuatore B und C wird das zugehörige Ventil in den ersten Stand gebracht, so daß die zweite Arbeitskammer b2, c2 mit dem Behälter 14 verbunden wird, während über die Pumpe 15 hydraulische Flüssigkeit der ersten Arbeitskammer b1, c1 zugeführt wird.

Im Falle einer elektrischen Störung sind alle betätigbaren Ventile 22, 24, 34, 44 unbetätigt und kann somit über diese Ventile Flüssigkeit zu dem Behälter 14 strömen. Die ersten Arbeitskammern b1 und c1 stehen aber direkt mit der Pumpe 15 in Verbindung, und aus diesen Kammern b1 und c1 könnte somit keine Flüssigkeit ausströmen. Dies würde die Möglichkeiten, die Verdeckeinheit manuell zu betätigen, um das Klappverdeck entweder zu öffnen, oder zu schließen, erheblich begrenzen. Aus diesem Grund ist ein manuell betätigbares Notventil 47 vorgesehen, das geöffnet werden kann, um so die Leitung 19 und damit die Arbeitskammern b1 und c1 mit dem Behälter zu verbinden.

In Figur 4a ist ein Ausführungsbeispiel der erfindungsgemäßen hydraulischen Bedienungseinrichtung gezeigt, bei der den Figuren 2 und 3 entsprechenden Teile mit den gleichen Bezugszeichen versehen sind. Bei der Ausführung der Figur 4a werden die Aktuatore B und C nicht regenerativ, wie in Figur 3, sondern normal betrieben.

Die ersten Arbeitskammern b1 und c1 der Aktuatore B und C sind nicht länger, direkt mit der Leitung 19, wie in Figur 3, verbunden, sondern erfindungsgemäß in der nachfolgend zu beschreibenden Weise.

Die Bedienungseinrichtung umfaßt ein ODER-Ventil 50 mit einem ersten Eingangsanschluß 51 und einem zweiten Eingangsanschluß 52, sowie einem einzigen Ausgangsanschluß 53. Das ODER-Ventil 50 ist einer allgemein bekannten Ausführung, welche Ausführung unter der Bezeichnung Wechselventil, oder unter der englischen Bezeichnung "shuttle valve" bekannt ist. Figur 4b zeigt eine mögliche Ausführung. Wichtig hierbei ist nicht so sehr die Tatsache, daß bei Anwesenheit hydraulischen Drucks bei einem oder bei den Eingangsanschlüssen auch hydraulischer Druck bei dem Ausgangsanschluß vorhanden ist, was die normale Funktion eines ODER-Ventils ist, sondern hauptsächlich, daß das Ventil 50 erlaubt, daß hydraulische Flüssigkeit von dem Ausgangsanschluß zu einem der beiden Eingangsanschlüssen strömen kann. Diese Wichtigkeit wird nachfolgend weiter erläutert werden.

Eine Leitung 54 verbindet den Anschluß 53 des Ventils 50 mit der ersten Arbeitskammer b1 des Aktuators B und mit der ersten Arbeitskammer c1 der Aktuators C.

Der Eingangsanschluß 51 schließt an Ausgangsanschluß 26 des Ventils 22 an, während der Eingangsanschluß 52 an den Ausgangsanschluß 27 des Ventils 24 anschließt.

Das ODER-Ventil 50 bewirkt, daß in der Leitung 54 faktisch immer ein hydraulischer Druck herrscht, wenn der Hauptbügelaktuator A betätigt wird, oder hydraulisch in einer seiner Endlagen gehalten wird. In diesem Fall wird nämlich eines der Ventile 22 oder 24 betätigt sein, und somit wird das Ventil 50 dann den Ausgangsanschluß dieses Ventils 22 oder 24 mit der Leitung 54 verbinden. Hierdurch kann der übliche und allgemein bekannte Bewegungsablauf der in Fugur 1 gezeigten Verdeckeinheit realisiert werden.

Im Vergleich zu der Figur 3 ist ein wichtiger Aspekt, daß kein separat zu betätigendes Notbedienungsventil vorhanden ist. Die Notbedienungsfunktion ist hier nämlich in automatischer Weise realisiert worden. Über die Leitung 54 und das ODER-Ventil 50-mit der obenbeschriebenen Ausführung - und von da aus über das Ventil 22 oder Ventil 24 ist nämlich immer eine Verbindung zwischen der ersten Arbeitskammer b1 und c1 und dem Behälter 14 gewährleistet, wenn eine elektrische Störung auftritt, und dadurch alle elektrischen Ventile 22, 24, 34, 44 ihre erste Position einnehmen.

Die Lösung gemäß Figur 4a schafft auch die erwünschte Haltefunktion, denn wenn die Ventile 22, 24 und 34, 44 elektrisch betätigt werden, sind alle Arbeitskammern der Aktuatore A, B und C von dem Behälter 14 abgeschlossen.

Der Hauptbügelaktuator A wird normal betrieben, das heißt, daß, um seine Kolbenstange auszuschieben, das Ventil 24 betätigt, und das Ventil 22 nicht betätigt wird, so daß die erste Arbeitskammer a1 mit dem Behälter 14 verbunden ist. In dieser Weise ist der gesamte hydraulische Druck auf die Kreisfläche des Kolbens dieses Aktuators A verfügbar, und kann dieser Aktuator A die zum Bewegen des Hauptbügels benötigte große Kraft liefern.

Es ist mit dem Schema gemäß Figur 4a nicht möglich, die Aktuatore B und C regenerativ zu betreiben. Dies kommt dadurch, daß beim Ausschieben der Kolbenstange dieser Aktuatore B,C, hydraulische Flüssigkeit aus ihrer ersten Arbeitskammer b1, c1 ausströmen können sollte. Um diese Aktuatore B,C regenerativ zu betreiben, müßte aber ihre erste Arbeitskammer b1, c1 auch mit dem Ausströmanschluß 18 der Pumpe 15 über das ODER-Ventil und eines der Ventile 22, 24 oder beide Ventile 22, 24 in verstärktem Zustand verbunden sein. In dieser Situation verhindern die Rückschlagventile 23, 25 das Ausströmen von Flüssigkeit aus der ersten Arbeitskammer b1, c1, und kann die Kolbenstange dieses Aktuators B,C somit nicht regenerativ ausschieben.

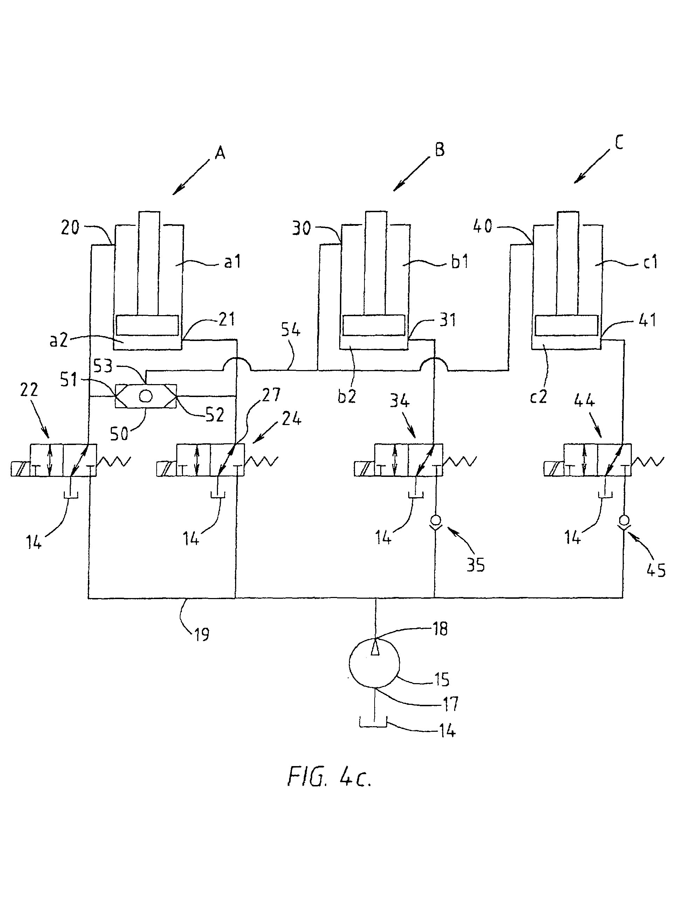

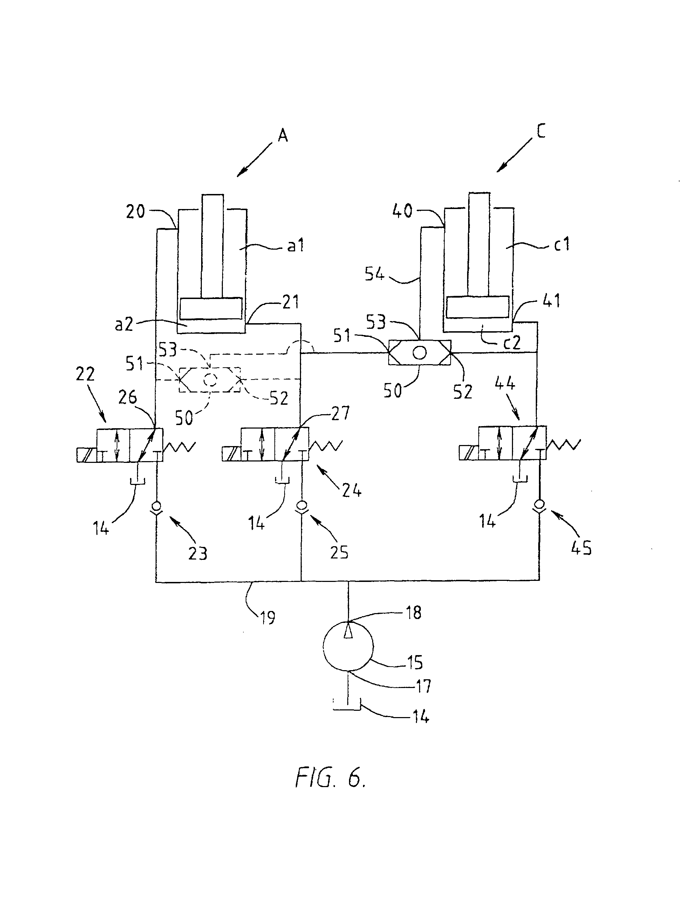

Um ein regeneratives Betreiben des, bzw. der mit dem ODER-Ventil verbundenen Aktuators, bzw. Aktuatore zu ermöglichen, schlägt die vorliegende Erfindung zwei Lösungen vor, die jeweils anhand der Figur 4c und der Figur 6 erläutert werden.

In Figur 4c ist eine Variante des Schemas der Figur 4 gezeigt, welche Variante ein regeneratives Betreiben der Aktuatore B und C erlaubt. In Figur 4c fehlen die Rückschlagventile 23 und 25 der Figur 4a. Hierdurch ist es möglich, daß beim regenerativen Betreiben der Aktuatore B,C hydraulische Flüssigkeit aus der ersten Arbeitskammer b1,c1 ausströmt. Das Weglassen der Rückschlagventile 23, 25 beim Schema der Figur 4a hat aber zur Folge, daß die Haltefunktion der Aktuatore A,B,C zum größten Teil verloren geht. Dies könnte in manchen Fällen zulässig sein, zum Beispiel wenn andere Mittel vorhanden sind, um das Halten zu realisieren, wie auf die Kolbenstange der Aktuatore wirksame Klemmittel. Insbesondere für den Hauptbügelaktuator A ist in der Praxis eine Haltefunktion oft sehr wünschenswert.

Die Haltefunktion des Hauptbügelaktuators A in Figur 4c könnte, in Verbindung mit einem regenerativen Betreiben der Aktuatore B,C eventuell dadurch realisiert werden, daß bei jedem der Anschlüsse des Aktuators A ein Rückschlagventil angeordnet wäre, die als hydraulisch zu öffnende Rückschlagventile (pilot operated check valves) ausgeführt sind, wobei die Steuerleitung des zu dem einen Anschluß gehörenden Rückschlagventils an die Leitung zu dem anderen Anschluß des Aktuators anschließt. Diese Lösung zum Schaffen der Haltefunktion ist allgemein bekannt.

Bei vielen hydraulischen Bedienungseinrichtungen für bewegliche Verdeckeinheiten von Fahrzeugen gibt es noch mehr hydraulisch betätigte Aktuatore, wobei insbesondere Aktuatore zum Betätigen von Verriegelungen vorhanden sind. Zum Beispiel kann ein Aktuator vorgesehen sein, der die vordere Klappverdeckkante an dem Rahmen über der Windschutzscheibe des Fahrzeugs verriegelt. Ein derartiger Aktuator braucht oft keine Haltefunktion, und wenn das ODER-Ventil dann mit einem zu diesem Aktuator gehörenden Zweipositionenventil verbunden wird, wird das obengenannte regenerative Betreiben mit Notbedienung auch möglich. Der Fachmann wird imstande sein, zu bestimmen, ob die spezifische Situation diese Lösung ermöglicht.

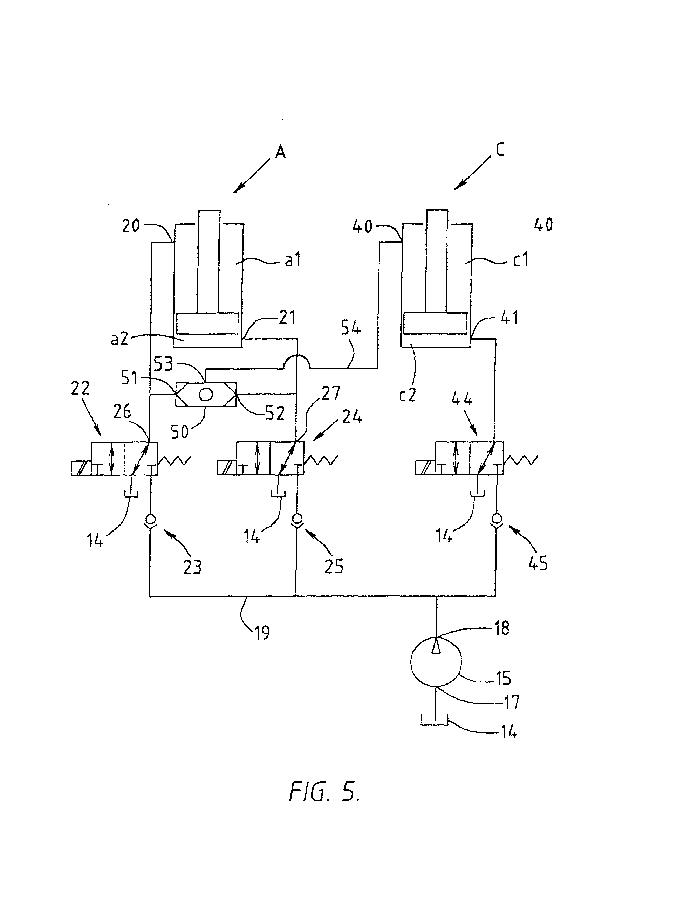

Figur 5 zeigt eine vereinfachte Version der Ausführung gemäß Figur 4a, bei der die gleichen Teile mit den gleichen Bezugszeichen angedeutet sind. Die Wirkung dieser Ausführung kan anhand der Erläuterung zu Figur 4a verstanden werden, wobei der Unterschied ist, daß der Hinterbügelaktuator B weggelassen ist. Dies ist zum Beispiel eine mögliche Ausführung bei Klappverdeckeinheiten, wobei das Klappverdeck keine separat beweglichen hinteren Teil aufweist, oder weil die Bewegung dieses Teils in einer anderen Weise realisiert wird. Es wird deutlich sein, daß das gleiche Schema auf eine Klappverdeckeinheit ohne Deckel, aber wohl mit einem Hinterbügel Anwendung findet.

Es wird bemerkt, daß es für die Notbedienungsmöglichkeit eines oder mehrerer der Aktuatore auch wünschenswert, oder aber erforderlich ist, daß in dem Notbedienungszustand hydraulische Flüssigkeit aus dem Behälter angesaugt werden kann, um die Arbeitskammer des Aktuators, dessen Volumen bei der Verlagerung der Kolbenstange zunimmt, auffüllen zu können.

Figur 6 zeigt eine Variante der Figur 5, bei der die gleichen Teile mit den gleichen Bezugszeichen angedeutet sind. Der Unterschied ist insbesondere, daß der Aktuator C in Figur 6 wohl regenerativ betrieben werden kann, während die Haltefunktion und die automatische Notbedienungsfunktion vollkommen realisiert sind. Figur 6 ist insbesondere darauf gerichtet, zu verdeutlichen, daß das ODER-Ventil mit einem seiner Eingangsanschlüsse, hier Anschluß 52, mit dem Ausgangsanschluß des betätigbaren Ventils 44, das zu dem regenerativ betriebenen Aktuator C gehört, verbunden ist. Es wird deutlich sein, daß der andere Eingangsanschluß dieses Ventils 50 nach Ansicht des Fachmannes mit dem Ausgangsanschluß eines oder mehrerer der Ausgangsanschlüsse der weiteren betätigbaren Zweipositionenventile verbunden werden kann, gegebenenfalls unter Anwendung eines oder mehrerer folgender ODER-Ventile. In Figur 6 ist strichliniert ein zusätzliches ODER-Ventil gezeigt, das mit Eingangsanschluß 51 des ODER-Ventils 50 verbunden ist, welches zusätzliche ODER-Ventil mit den Ausgangsanschlüssen der Ventile 22 und 24 verbunden ist, um während des bezweckten Zeitraums hydraulischen Druck in der ersten Arbeitskammer c1 des Aktuators C verschaffen zu können.

Durch die Verbindung eines Eingangsanschlusses des Ventils 50 mit der zweiten Arbeitskammer c2 des Aktuators C ist es möglich, daß beim regenerativen Ausschieben der Kolbenstange Flüssigkeit aus der ersten Arbeitskammer c1 zu der zweiten Arbeitskammer c2 strömt.

## Patentansprüche

1. Hydraulische Bedienungseinrichtung für eine Verdeckeinheit eines Fahrzeugs mit mehreren hydraulisch beweglichen Teilen, mit einem zwischen einem geschlossenen Stand und einem geöffneten Stand bewegliches klapp-Verdeck, welche Bedienungseinrichtung umfaßt:
- einen ersten hydraulischen Aktuator (A), sowie einen oder mehrere weitere hydraulische Aktuatore (B,C), jeweils zum Bewegen eines Teils der Verdeckeinheit,
- eine Pumpe (15) mit einem Ausströmanschluß (18) und einem Sauganschluß (17),
- einen Behälter (14) für hydraulische Flüssigkeit,
- wobei der Sauganschluß (17) der Pumpe mit dem Behälter (14) verbunden ist,
- wobei ein erster Aktuator (A) ein doppeltwirkender Aktuator mit einem Gehäuse und einer hin- und herverschieblichen Kolbenstange ist, welcher erste Aktuator (A) eine erste Arbeitskammer (a1) und eine zweite Arbeitskammer (a2) aufweist mit einem jeweils zugehörigen ersten (20) und zweiten (21) Anschluß zum Zu- und Abführen hydraulischer Flüssigkeit, um die Kolbenstange zu verschieben,
- wobei ein zum ersten Aktuator gehörendes betätigbares Zweipositionenventil (22) vorgesehen ist, das in einem ersten Stand den ersten Anschluß (20) des ersten Aktuators mit dem Behälter (14) und in einem zweiten Stand mit dem Ausströmanschluß (18) der Pumpe verbindet,
- wobei weiter ein zweites (24) und eventuell ein oder mehrere (34,44) weitere betätigbare Zweipositionenventile vorgesehen sind, die zu einem oder mehreren weiteren Aktuatoren (B,C) gehört, oder gehören, welche zweite und etwaige weitere Zweipositionenventile jeweils einen Ausgangsanschluß (27) aufweisen, der mit einem oder mehreren der weiteren Aktuatore verbunden ist, und welcher in einem ersten Stand des betreffenden Ventils mit dem Behälter (14) und in einem zweiten Stand mit dem Ausströmanschluß der Pumpe (18) verbunden ist,
- und wobei die Bedienungseinrichtung in solcher Weise mit Notbedienungsmitteln versehen ist, daß ein oder mehrere der Aktuatore eine manuelle Verlagerung eines oder mehrerer Teile der Verdeckeinheit gestatten, **dadurch gekennzeichnet, daß** die Notbedienungsmittel ein ODER-Ventil (50) mit einem ersten (51) und einem zweiten (52) Eingangsanschluß, sowie einen einzelnen Ausgangs anschluß (53) umfassen, welches ODER-Ventil einen seiner beiden Eingangsanschlüsse (51,52) mit seinem Ausgangsanschluß (53) verbinden kann, wobei der Ausgangsanschluß (53) des ODER-Ventils mit dem ersten Anschluß (30,40) eines weiteren Aktuators (B,C) verbunden ist,
und wobei der erste Eingangsanschluß (51) und der zweite Eingangsanschluß (52) des ODER-Ventils jeweils mit dem Ausgangsanschluß (26,27) unterschiedlicher betätigbarer Zweipositionenventile verbunden sind.

2. Einrichtung nach Anspruch 1, bei der das ODER-Ventil in solcher Weise ausgeführt ist, daß eine Flüssigkeitsströmung von dem Ausgangsanschluß (53) zu einem oder beiden Eingangsanschlüsse (51,52) des ODER-Ventils möglicht ist.

3. Einrichtung nach Anspruch 2, bei der die mit dem ODER-Ventil verbundenen betätigbaren Zweipositionenventile (22,24) in unbetätigtem Zustand ihren ersten stand einnehmen.

4. Einrichtung nach einem oder mehreren der vorhergehenden Ansprüche, bei der der erste Eingangsanschluß (51) des ODER-Ventils mit dem Ausgangsanschluß (26) des ersten betätigbaren Ventils (22) und der zweite Eingangsanschluß (52) des ODER-Ventils mit dem Ausgangsanschluß (27) des zweiten betätigbaren Ventils (24) verbunden ist.

5. Einrichtung nach einem oder mehreren der Ansprüche 1-4, bei der die weiteren Zweipositionenventile (34,44) ein drittes betätigbares Zweipositionenventil umfassen (44), und bei der der erste Eingangsanschluß (51) des ODER-Ventils (50) mit dem Ausgangsanschluß des zweiten betätigbaren Ventils (24), und der zweite Eingangsanschluß (52) des ODER-Ventils (50) mit dem Ausgangsanschluß des dritten betätigbaren Ventils (44) verbunden ist.

6. Einrichtung nach einem oder mehreren der vorhergehenden Ansprüche, bei der ein oder mehrere der betätigbaren Zweipositionenventile in unbetätigtem Zustand den ersten stand einnehmen.

7. Einrichtung nach einem oder mehreren der vorhergehenden Ansprüche, bei der die betätigbaren Zweipositionenventile elektromagnetisch betätigte 3/2-Kugelsitzventile mit Federrückstellung sind.

8. Einrichtung nach einem oder mehreren der vorhergehenden Ansprüche, bei der zwischen einem oder mehreren der betätigbaren Zweipositionenventilen und dem Ausströmanschluß der Pumpe ein in Richtung auf die Pumpe (15) schließendes Rückschlagventil (23,25,36,45) vorgesehen ist.

9. Einrichtung nach einem oder mehreren der vorhergehenden Anschlüsse, bei der die Pumpe (15) eines solchen Typs ist, daß keine Flüssigkeit von dem Ausströmanschluß zu dem Sauganschluß strömen kann.

10. Einrichtung nach einem oder mehreren der vorhergehenden Ansprüche, bei der der erste Aktuator eine an einer Seite hervorstehende Kolbenstange hat, wobei die Kolbenstange bei dem der ersten Arbeitskammer Zuführen von Flüssigkeit ausschiebt, und bei dem der zweiten Arbeitskammer Zuführen von Flüssigkeit einschiebt.

11. Einrichtung nach Anspruch 5, bei der ein zweiter doppeltwirkender Aktuator mit einer ersten Arbeitskammer und einer zweiten Arbeitskammer, sowie zugehörigen Anschlüssen vorgesehen ist, wobei der Ausgangsanschluß (27) des zweiten betätigbaren Zweipositionenventils (24) an die erste Arbeitskammer (C1) des zweiten Aktuators (C) anschließt, und der Ausgangsanschluß des dritten betätigbaren Zweipositionenventils (44) an die zweite Arbeitskammer (C2) des zweiten Aktuators (C) anschließt.

12. Einrichtung nach Anspruch 11, bei der die Verdeckeinheit einen gegenüber der Fahrzeugkarosserie hinauf- und herunterschwenkbaren Hauptbügel (6) umfaßt, der das Klappverdeck trägt, wobei der zweite Aktuator (13) den Hauptbügel antreibt.

13. Einrichtung nach einem oder mehreren der vorhergehenden Ansprüche, bei der die Verdeckeinheit weiter einen Deckel (4) zum Abdecken eines Unterbringungsraums des Fahrzeugs umfaßt, in dem das Klappverdeck in geöffnetem Zustand untergebracht ist.

14. Einrichtung nach Anspruch 12 oder 13, bei der die (7) Verdeckeinheit weiter einen Hinter- oder Stoffspannbügel umfaßt, der hinauf- und herunterschwenkbar ist, zum Bewegen eines hinter dem Hauptbügel liegenden Teils des Klappverdecks (5).

15. Verdeckeinheit für ein Fahrzeug, umfassend eine hydraulische Bedienungseinrichtung nach einem oder mehreren der vorhergehenden Ansprüche.

16. Ein Fahrzeug mit einer Verdeckeinheit und einer hydraulischen Bedienungseinrichtung für die Verdeckeinheit nach einem oder mehreren der vorhergehenden Ansprüche.

## Claims

1. Hydraulic operating apparatus for a hood unit of a vehicle with several hydraulically movable parts, with a collapsible hood movable between a closed position and an opened position, which operating apparatus comprises:
- a first hydraulic actuator (A), plus one or more further hydraulic actuators (B, C), in each case for moving a part of the hood unit,
- a pump (15) with a delivery connection (18) and a suction connection (17),
- a container (14) for hydraulic fluid,
- wherein the suction connection (17) of the pump is connected to the container (14),
- wherein a first actuator (A) is a double-action actuator with a housing and a piston rod able to be shifted to and fro, which first actuator (A) has a first working chamber (a1) and a second working chamber (a2) with in each case an associated first (20) and second (21) connection for the supply and removal of hydraulic fluid, in order to shift the piston rod,
- wherein a two-position valve (22), able to be actuated, belonging to the first actuator is provided, which, in a first position, connects the first connection (20) of the first actuator to the container (14) and, in a second position, to the delivery connection (18) of the pump,
- wherein a second (24) and possibly one or more further (34, 44) two-position valves, able to be actuated, are further provided, which belongs, or belong, to one or more actuators (B, C), which second and any further two-position valves in each case have an output connection (27) which is connected to one or more of the further actuators, and which, in a first position of the valve concerned, is connected to the container (14) and, in a second position, to the delivery connection of the pump (18),
- and wherein the operating apparatus is provided with emergency-operation means such that one or more of the actuators allow a manual displacement of one or more parts of the hood unit, **characterized in that** the emergency-operation means comprise an OR-valve (50) with a first (51) and a second (52) input connection, plus a single output connection (53), which OR-valve can connect one of its two input connections (51, 52) to its output connection (53), wherein the output connection (53) of the OR-valve is connected to the first connection (30, 40) of a further actuator (B, C),
and wherein the first input connection (51) and the second input connection (52) of the OR-valve are in each case connected to the output connection (26, 53) of different two-position valves able to be actuated.

2. Apparatus according to claim 1, in which the OR-valve is designed such that a flow of fluid from the output connection (53) to one or both input connections (51, 52) of the OR-valve is possible.

3. Apparatus according to claim 2, in which the two-position valves able to be actuated (22, 24) connected to the OR-valve assume their first position when not actuated.

4. Apparatus according to one or more of the previous claims, in which the first input connection (51) of the OR-valve is connected to the output connection (26) of the first valve able to be actuated (22) and the second input connection (52) of the OR-valve to the output connection (27) of the second valve able to be actuated (24).

5. Apparatus according to one or more of claims 1-4, in which the further two-position valves (34, 44) include a third two-position valve able to be actuated (44), and in which the first input connection (51) of the OR-valve (50) is connected to the output connection of the second valve able to be actuated (24), and the second input connection (52) of the OR-valve (50) to the output connection of the third valve able to be actuated (44).

6. Apparatus according to one or more of the previous claims, in which one or more of the two-position valves able to be actuated assume the first position when not actuated.

7. Apparatus according to one or more of the previous claims, in which the two-position valves able to be actuated are electromagnetically actuated 3/2-ball seat valves with spring return.

8. Apparatus according to one or more of the previous claims, in which a non-return valve (23, 25, 35, 45) closing in the direction of the pump (15) is provided between one or more of the two-position valves able to be actuated and the delivery connection of the pump.

9. Apparatus according to one or more of the previous claims, in which the pump (15) is of such a type that no fluid can flow from the delivery connection to the suction connection.

10. Apparatus according to one of more of the previous claims, in which the first actuator has a piston rod protruding on one side, the piston rod being pushed out when fluid is supplied to the first working chamber and pushed in when fluid is supplied to the second working chamber.

11. Apparatus according to claim 5, in which a second double-action actuator with a first working chamber and a second working chamber, plus associated connections, is provided, wherein the output connection (27) of the second two-position valve able to be actuated (24) connects to the first working chamber (c1) of the second actuator (C), and the output connection of the third two-position valve able to be actuated (44) to the second working chamber (c2) of the second actuator (C).

12. Apparatus according to claim 11, in which the hood unit comprises a main frame (6), able to be swivelled up and down relative to the vehicle body, which carries the collapsible hood, the second actuator (B) driving the main frame.

13. Apparatus according to one of more of the previous claims, in which the hood unit further comprises a lid (4) to cover an accommodation space of the vehicle, in which the collapsible hood is housed when opened.

14. Apparatus according to claim 12 or 13, in which the hood unit further comprises a rear or fabric bracing frame (7), able to be swivelled up and down, to move a part of the collapsible hood (5) lying behind the main frame.

15. Hood unit for a vehicle, comprising a hydraulic operating apparatus according to one or more of the previous claims.

16. A vehicle with a hood unit and a hydraulic operating apparatus for the hood unit according to one or more of the previous claims.

## Revendications

1. Dispositif de manoeuvre hydraulique pour une unité formant capote d'un véhicule, comportant plusieurs éléments à déplacement hydraulique, et avec une capote mobile entre un état déployé et un état rabattu, ce dispositif comprenant :
- un premier actionneur hydraulique (A) ainsi qu'un ou plusieurs autre(s) actionneur(s) hydraulique(s) (B, C), servant chacun au déplacement d'un élément de l'unité formant capote ;
- une pompe (15) avec un orifice d'évacuation (18) et un orifice d'aspiration (17) ;
- un réservoir (14) pour du fluide hydraulique ;
- l'orifice d'aspiration (17) de la pompe étant relié au réservoir (14),
- un premier actionneur (A) étant un vérin à double effet comportant une enveloppe et une tige de piston à mouvement alternatif, lequel premier actionneur (A) présente une première chambre de travail (a1) et une deuxième chambre de travail (a2) ayant chacune un premier (20) et un deuxième (21) orifices correspondants pour l'admission et pour l'évacuation de fluide hydraulique, afin de déplacer la tige de piston ;
- étant prévu une soupape à deux positions (22) actionnable et associée au premier actionneur, et qui, dans un premier état, relie le premier orifice (20) du premier actionneur au réservoir (14) tandis que, dans un deuxième état, elle le relie à l'orifice d'évacuation (18) de la pompe ;
- étant, en outre, prévu une deuxième (24) et éventuellement une ou plusieurs autres (34, 44) soupape(s) actionnable (s) à deux positions, qui est ou sont associée(s) à un ou à plusieurs autre(s) actionneur(s) (B, C), lesdites deuxième et éventuellement autres soupape(s) à deux positions présentant chacune un orifice de sortie (27) qui est relié à un ou à plusieurs des autres actionneurs, et qui, dans un premier état de la soupape concernée, est relié au réservoir (14) et, dans un deuxième état, est relié à l'orifice d'évacuation (18) de la pompe ;
- et le dispositif de manoeuvre étant pourvu de moyens de manoeuvre de secours de telle sorte qu'un ou plusieurs des actionneurs permette(nt) un déplacement manuel d'un ou de plusieurs élément(s) de l'unité formant capote, et étant **caractérisé en ce que** les moyens de manoeuvre de secours comprennent une soupape OU (50) comportant un premier (51) et un deuxième (52) orifices d'entrée, ainsi qu'un seul orifice de sortie (53), laquelle soupape OU peut relier l'un de ses deux orifices d'entrée (51, 52) à son orifice de sortie (53), et l'orifice de sortie (53) de la soupape OU étant relié au premier orifice (30, 40) d'un autre actionneur (B, C), et où le premier orifice d'entrée (51) et le deuxième orifice d'entrée (52) de la soupape OU sont chacun reliés à l'orifice de sortie (26, 27) de soupapes différentes à deux positions, actionnables.

2. Dispositif selon la revendication 1, dans lequel la soupape OU est conçue de telle manière qu'un écoulement de fluide à partir de l'orifice de sortie (53) soit possible vers l'un ou vers les deux des orifices d'entrée (51, 52) de la soupape OU.

3. Dispositif selon la revendication 2, dans lequel les soupapes actionnables à deux positions (22, 24), qui sont reliées à la soupape OU, prennent, à l'état non actionné, leur premier état.

4. Dispositif selon une ou plusieurs des revendications précédentes, dans lequel le premier orifice d'entrée (51) de la soupape OU est relié à l'orifice de sortie (26) de la première soupape actionnable (22), et le deuxième orifice d'entrée (52) de la soupape OU est relié à l'orifice de sortie (27) de la deuxième soupape actionnable (24).

5. Dispositif selon une ou plusieurs des revendications 1 à 4, dans lequel les autres soupapes à deux positions (34, 44) comprennent une troisième soupape actionnable à deux positions (44), et dans laquelle le premier orifice d'entrée (51) de la soupape OU (50) est relié à l'orifice de sortie de la deuxième soupape actionnable (24), et le deuxième orifice d'entrée (52) de la soupape OU (50) est relié à l'orifice de sortie de la troisième soupape actionnable (44).

6. Dispositif selon une ou plusieurs des revendications précédentes, dans lequel une ou plusieurs des soupapes actionnables à deux positions prend ou prennent, à l'état non actionné, le premier état.

7. Dispositif selon une ou plusieurs des revendications précédentes, dans lequel les soupapes actionnables à deux positions sont des soupapes 3/2 à siège à bille et à actionnement électromagnétique, avec rappel par ressort.

8. Dispositif selon une ou plusieurs des revendications précédentes, dans lequel il est prévu, entre une ou plusieurs des soupapes actionnables à deux positions et l'orifice d'évacuation de la pompe, un clapet antiretour (23, 25, 35, 45) qui se ferme en direction de la pompe (15).

9. Dispositif selon une ou plusieurs des revendications précédentes, dans lequel la pompe (15) est d'un type tel qu'aucun fluide ne puisse s'écouler de son orifice d'évacuation vers son orifice d'aspiration.

10. Dispositif selon une ou plusieurs des revendications précédentes, dans lequel le premier actionneur comporte une tige de piston faisant saillie au niveau d'un côté, la tige de piston sortant lors de l'amenée de fluide à la première chambre de travail, et rentrant lors de l'amenée de fluide à la deuxième chambre de travail.

11. Dispositif selon la revendication 5, dans lequel il est prévu un deuxième actionneur à double effet ayant une première chambre de travail et une deuxième chambre de travail ainsi que des orifices correspondants, l'orifice de sortie (27) de la deuxième soupape actionnable à deux positions (24) se raccordant à la première chambre de travail (c1) du deuxième actionneur (C), tandis que l'orifice de sortie de la troisième soupape actionnable à deux positions (44) se raccorde à la deuxième chambre de travail (c2) du deuxième actionneur (C).

12. Dispositif selon la revendication 11, dans lequel l'unité formant capote comprend un arceau principal (6) qui peut pivoter vers le haut et vers le bas par rapport à la carrosserie du véhicule et qui porte la capote pliante, et dans laquelle le deuxième actionneur (B) commande l'arceau principal.

13. Dispositif selon une ou plusieurs des revendications précédentes, dans lequel l'unité formant capote comprend en outre un capot (4) pour recouvrir un espace de rangement dans le véhicule, prévu pour loger la capote pliante à l'état rabattu.

14. Dispositif selon la revendication 12 ou 13, dans lequel l'unité formant capote comporte en outre un arceau arrière ou de tension de matériau (7), qui peut pivoter vers le haut et vers le bas pour déplacer une partie de la capote pliante (5) se trouvant derrière l'arceau principal.

15. Unité formant capote pour un véhicule, comprenant un dispositif de manoeuvre hydraulique, selon une ou plusieurs des revendications précédentes.

16. Véhicule comportant une unité formant capote et un dispositif de manoeuvre hydraulique pour l'unité formant capote, selon une ou plusieurs des revendications précédentes.
